# EUROPEAN PATENT SPECIFICATION

(11) **EP 1 193 959 B1**
(45) Date of publication and mention of the grant of the patent: **28.02.2007**
(21) Application number: 01307482.8
(22) Date of filing: 03.09.2001
(51) Int. Cl.: G10L 15/26, G01C 21/36

(54) **Hierarchized dictionaries for speech recognition**
Hierarchisierte Wörterbücher für die Spracherkennung
Dictionnaires hiérarchisés pour la reconnaissance de la parole

(30) Priority: 05.09.2000 JP 2000267954
(43) Date of publication of application: 03.04.2002
(73) Proprietor: Pioneer Corporation, Meguro-ku, Tokyo (JP)
(72) Inventor: Saito, Hiroshi, c/o Pioneer Corporation, Kawagoe-shi, Saitama (JP)
(74) Representative: Haley, Stephen

(56) References cited:
- EP-A- 0 935 123
- EP-A- 1 083 405
- US-A- 6 108 631
- US-A- 6 112 174

## Description

The present invention relates to a voice recognition unit the operability and the responsibility of which are enhanced and a method thereof.

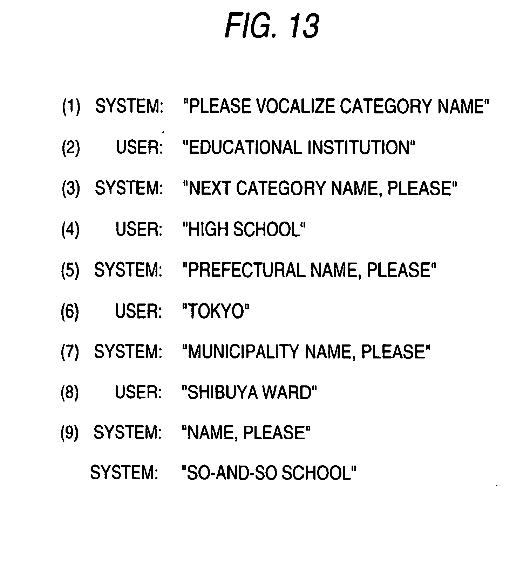

Heretofore, in case the name of an institution is retrieved using a voice recognition unit, finally the name is vocalized after queuing words are narrowed down based upon a category and a place name as in a procedure for narrowing down shown in Fig. 13 because of securing the ratio of recognition and constraint such as usable memory size. Speech recognition in this case means speech recognition for operation by voice that for example, a car navigation system recognizes user's voice input via a microphone and executes processing for operation using the recognized voice and particularly means speech recognition in which operation for selecting a desired institution out of enormous institution candidates is made by voice. In an initial step, a control command dictionary for operating car navigation is set in the system and a user notifies the system of his/her intention to set a path to a destination by vocalizing a command, "setting a destination".

The system is required to retrieve a concrete place to be a destination, however, as the number of institutions is enormous, the concrete place cannot be specified in one speech recognition. Then, to reduce the number of institutions which are the objects of retrieval, narrowing down based upon a category name is performed. First, for narrowing down based upon a category name, after a category name dictionary is selected as a recognition dictionary, a user is prompted to vocalize a category name as 1) "Please vocalize a category name" . In the meantime, when the user vocalizes 2) "Educational institution", a voice recognition unit recognizes the vocalization. The system prompts the user to specify a further detailed subcategory of the category of the educational institution and after a subcategory name dictionary is selected as the recognition dictionary, the user is prompted to vocalize a subcategory name as 3) "Next category name, please". In the meantime, when the user vocalizes 4) "High school", the voice recognition unit recognizes the vocalization.

When the subcategory is determined, the system vocalizes 5) "Prefectural name, please" after a prefectural name dictionary is selected as the recognition dictionary to narrow down based upon an area next and prompts the user to narrow down an area in units of a prefectural name. In the meantime, when the user vocalizes 6) Tokyo, the voice recognition unit recognizes the vocalization as Tokyo. In case the subcategory is a high school and the prefectural name is Tokyo, it is determined in the system beforehand to prompt a user to specify a municipality name and after a municipality name dictionary is selected as the recognition dictionary, the system prompts the user to vocalize a municipality name as 7) "Municipality name, please". In the meantime, when the user vocalizes 8) Shibuya Ward, the voice recognition unit recognizes the vocalization. As the number of institutions is narrowed down enough when specification is made so far, the retrieval of the institutional name is started.

After the system selects a dictionary of high schools in Shibuya Ward of Tokyo as the recognition dictionary, it prompts the user to vocalize an institutional name as 9) "The name, please" . When the user vocalizes "School So-and-So", the voice recognition unit recognizes the vocalization and sets School So-and-So as a destination.

As described above, a troublesome procedure that the hierarchical structure of speech recognition dictionaries is sequentially followed and all conditions for narrowing down are determined is required to be executed. A method of preparing all institutional names to be finally retrieved at the upmost hierarchy to avoid the execution of the above-mentioned troublesome procedure exists.

However, in this case, a memory having enormous capacity is required and there is also a problem that the ratio of recognition is deteriorated and the performance of a response is not satisfactory. For example, as a certain user does not play golf, he/she does not retrieve golf links, however, in case all institutional names including the category in which the user is not interested (in this case, golf links) are prepared, a certain institutional name may be recognized as the name of golf links by mistake. This imposes stress on a user. Other examples of prior art systems can be found disclosed in documents EP-A-0935123, US-A-6112174 and US-A-6108631.

The invention is made in view of the above-mentioned situation and has an object to provide a voice recognition unit and a method thereof the operability of which is improved and the response of which is enhanced respectively by executing a recognition process using a dictionary classified according to at least one narrowing-down condition set by a user beforehand in addition to a dictionary for narrowing down at the upmost hierarchy as objects of recognition.

The invention also has an object to provide a voice recognition unit and a method thereof wherein an institutional name matched with the following narrowing-down condition can be retrieved by one vocalization by setting a narrowing-down condition such as a category and an area name frequently used by a user beforehand without troublesome processing that hierarchical structure is sequentially followed and a narrowing-down condition is determined and further, as a narrowing-down condition dictionary is also simultaneously an object of recognition, retrieval is enabled according to a conventional type procedure that hierarchical structure is sequentially followed and a narrowing-down condition is determined even if an institutional name unmatched with a narrowing-down condition set beforehand is required to be retrieved.

In order to achieve the abovementioned objectives, the present invention provides a voice recognition apparatus in accordance with claim 1.

Preferably, the specific level of the hierarchy is the highest level of the hierarchy.

Preferably, the specific level of the hierarchy is a level which is lower than the highest level of the hierarchy.

Preferably, the extracting means, in response to the recognition by the recognition means of further voice commands, extracts as the list of queuing words:
lower level dictionaries being associated with selected queuing words, each one of which is located at a hierarchical level which is iteratively lower with each recognition process.

Preferably, the speech recognition dictionaries comprise:
a classification dictionary for storing the classification names of institutions; and
an institution dictionary for storing the names of institutions which belong to a type of institution.

Preferably, the speech recognition dictionaries comprise:
an area dictionary for storing area names; and
an institution dictionary for storing the names of institutions existing in an area.

Preferably, when a user selects a desired dictionary, the contents of that dictionary are stored in the storage means.
The present invention further provides a voice recognition method in accordance with claim 8.

Preferably, the specific level is a level which is lower than the highest level in the hierarchy.

Preferably, the dictionaries classified according to at least one narrowing-down condition set by a user beforehand are dictionaries the frequency of use of which is high.

In the Drawings;
Fig. 1 is a block diagram showing an embodiment of a voice recognition unit according to the invention;
Fig. 2 is an explanatory drawing for explaining a voice recognition method according to the invention and shows an example of a hierarchical dictionary tree;
Fig. 3 is an explanatory drawing for explaining the voice recognition method according to the invention and shows an example of a hierarchical dictionary tree;
Fig. 4 is an explanatory drawing for explaining the voice recognition method according to the invention and shows an example of a hierarchical dictionary tree;
Fig. 5 is an explanatory drawing for explaining the voice recognition method according to the invention and shows an example of a hierarchical dictionary tree;
Fig. 6 is a flowchart showing a procedure for following hierarchies in the hierarchical dictionary tree shown in Fig. 3;
Fig. 7 is a flowchart showing a procedure for following hierarchies in the hierarchical dictionary tree shown in Fig. 5;
Fig. 8 is a flowchart showing the details of the procedures for a recognition process shown in Figs. 6 and 7;
Fig. 9 shows the initial setting method of a narrowing-down condition on a display screen;
Fig. 10 shows the initial setting method of a narrowing-down condition on the display screen;
Fig. 11 shows the initial setting method of a narrowing-down condition on the display screen;
Fig. 12 shows the initial setting method of a narrowing-down condition on the display screen; and
Fig. 13 is an explanatory drawing for explaining a conventional type procedure for narrowing down.

Now, a description will be given in more detail of preferred embodiments of the invention with reference to the accompanying drawings.

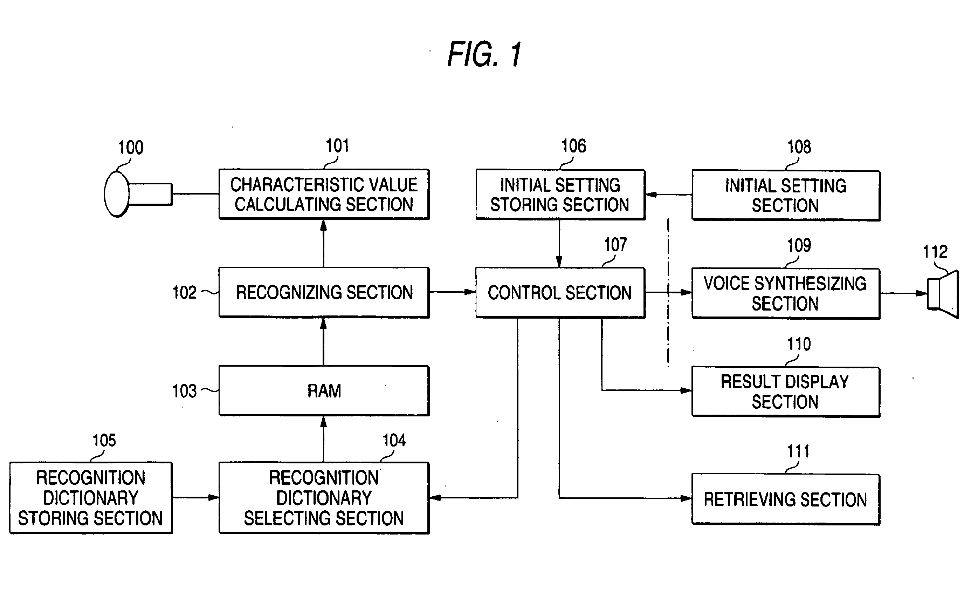

Fig. 1 is a block diagram showing an embodiment of a voice recognition unit according to the invention.

As shown in Fig. 1, a microphone 100 collects the vocalization of a user, converts it to an electric signal and supplies it to a characteristic value calculating section 101. The characteristic value calculating section 101 converts pulse code modulation (PCM) data to a characteristic value suitable for speech recognition and supplies it to a recognizing section 102. The recognizing section 102 calculates similarity between input voice converted to a characteristic value and each queuing word in a recognition dictionary loaded into RAM 103 and outputs n pieces of queuing words higher in similarity and respective similarity (scores) to a control section 107 as a result.

A recognition dictionary storing section 105 stores plural dictionaries for speech recognition. For the types of dictionaries, there are a narrowing-down condition dictionary and provided every narrowing-down condition and an institutional name dictionary storing final place names classified by the combination of narrowing-down conditions, for example concrete institutional names. Further, for the dictionary according to a narrowing-down condition, there are a large area dictionary storing area names showing a large area such as a prefectural name for retrieving a place, a small area dictionary provided every prefecture and storing area names showing a small area such as a municipality name which belongs to each prefecture, a category dictionary storing great classification category names of retrieval places such as the type of an institution and a subcategory dictionary provided every great classification category and storing subcategory names which belong to each great classification category.

A recognition dictionary selecting section 104 selects a desired dictionary out of dictionaries stored in the recognition dictionary storing section 105 according to an instruction from the control section 107 and loads it into RAM 103 as queuing words. An initial setting section 108 is composed of a remote control key or voice operation means for a user to select so as to set a desired dictionary out of institutional name dictionaries according to the combination of narrowing-down conditions as a dictionary at the uppermost hierarchy. An institutional name dictionary set in the initial setting section 108 is an initial setting dictionary by a user. A method of setting will be described later. An initial setting storing section 106 stores a narrowing-down condition set by a user as initial setting via the initial setting section 108 or which institutional name dictionary a user sets as an initial setting dictionary.

A voice synthesizing section 109 generates synthetic voice for a guidance message and an echo and outputs it to a speaker 112. A retrieving section 111 is provided with databases of map data not shown and others and retrieves the location map, the address, the telephone number and the service contents of an institution finally retrieved by speech recognition from a detailed information database. A result display section 110 is a display for displaying detailed information retrieved by the retrieving section 111 together with the result of recognition in voice operation, queuing words, a guidance message and an echo.

The control section 107 controls each component according to the result of output outputted from the above-mentioned each component. That is, the control section 107 controls so that the recognition dictionary selecting section 104 first extracts a category dictionary from the recognition dictionary storing section 105 when the retrieval of an institution by speech recognition is made and sets the extracted category dictionary in RAM 103 as queuing words. At this time, the control section controls so that a narrowing-down condition or an institutional name dictionary set by a user beforehand is recognized by referring to the initial setting storing section 106, the recognition dictionary selecting section 104 similarly extracts the corresponding narrowing-down condition or the corresponding institutional name dictionary from the recognition dictionary storing setting 105 and sets it in RAM 103 as queuing words.

The voice synthesizing section 109 is instructed to generate a guidance message, "Please vocalize a category name" for example and to output it from the speaker 112.

When a queuing word in a category dictionary stored in RAM 103 as queuing words is input in voice, a dictionary of a subcategory which belongs to a category shown by input voice is read from the recognition dictionary storing section 105 and is loaded into RAM 103 to be the next queuing word. When a queuing word in the subcategory dictionary stored in RAM 103 as queuing words is input in voice, the subcategory shown by input voice is stored, a large area dictionary related to the subcategory is read from the recognition dictionary storing section 105 and is loaded into RAM 103 to be the next queuing word.

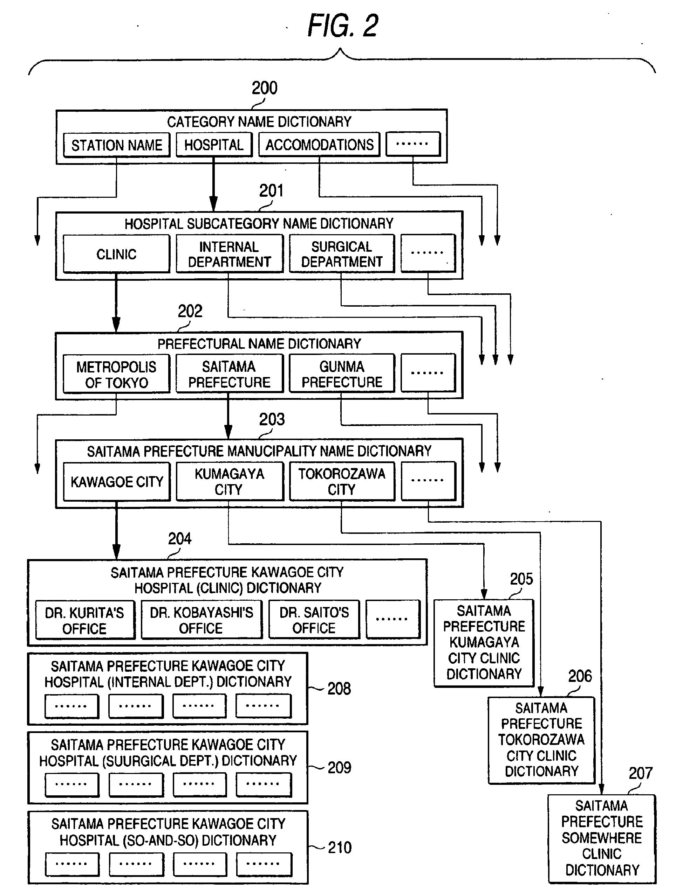

When a queuing word in the large area dictionary stored in RAM 103 as queuing words is input in voice, a dictionary of a small area which belongs to the input large area is read from the recognition dictionary storing section 105 and is loaded into RAM 103 to be the next queuing word. When a queuing word in the small area dictionary stored in RAM 103 as queuing words is input in voice, the small area shown by input voice is stored, a dictionary showing a concrete one place related to the small area is read from the recognition dictionary storing section 105 and is loaded into RAM 103 to be the next queuing word. As described above, a dictionary composed of queuing words is hierarchically stored in the recognition dictionary storing section 105 so that it is sequentially changed and is hierarchically used. That is, as shown as a hierarchical dictionary tree in Figs. 2 to 5 described later, a subcategory dictionary is located under a category dictionary, a small area dictionary is located under a large area dictionary and plural dictionaries showing a concrete one place exist at the bottom hierarchy.

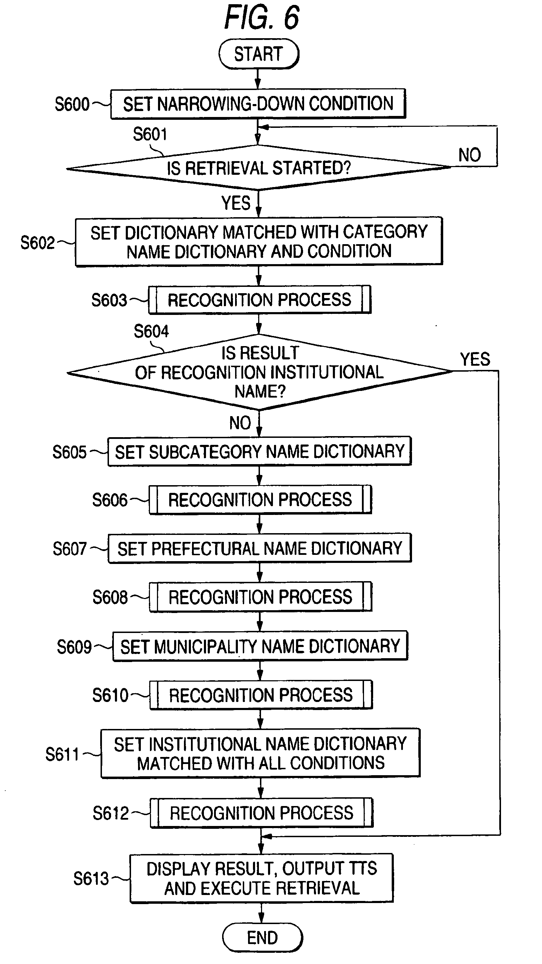

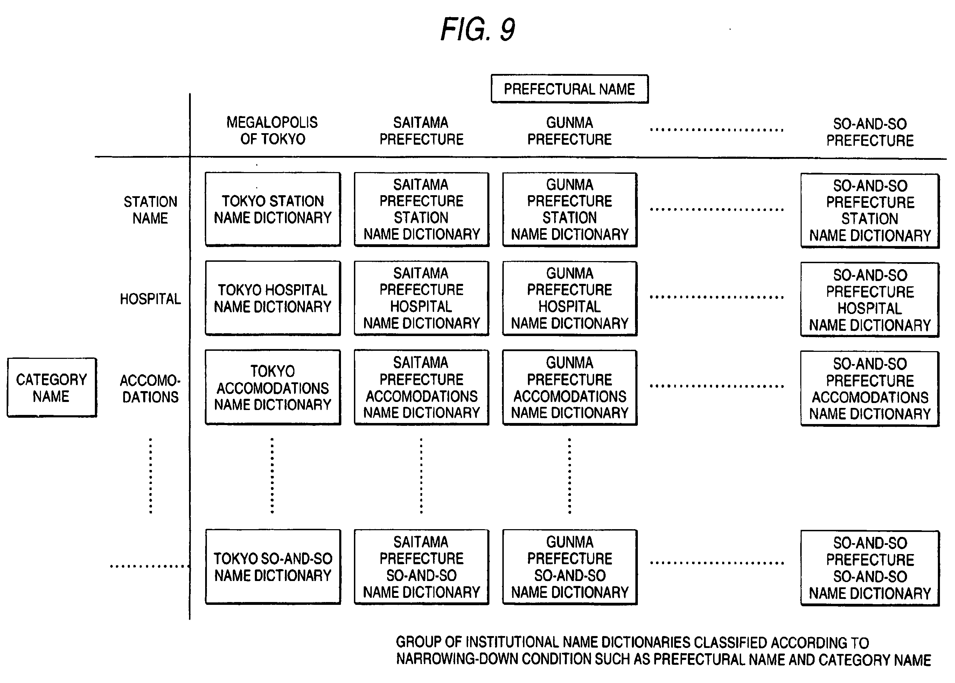

Figs. 2 to 12 are explanatory drawings for explaining the operation of this embodiment of the invention shown in Fig. 1, Figs. 2 to 5 show a hierarchical dictionary tree of speech recognition dictionaries having hierarchical structure, Figs. 6 to 8 are flowcharts showing the operation and Figs. 9 to 12 show the configuration of a screen for the initial setting of a narrowing-down condition.

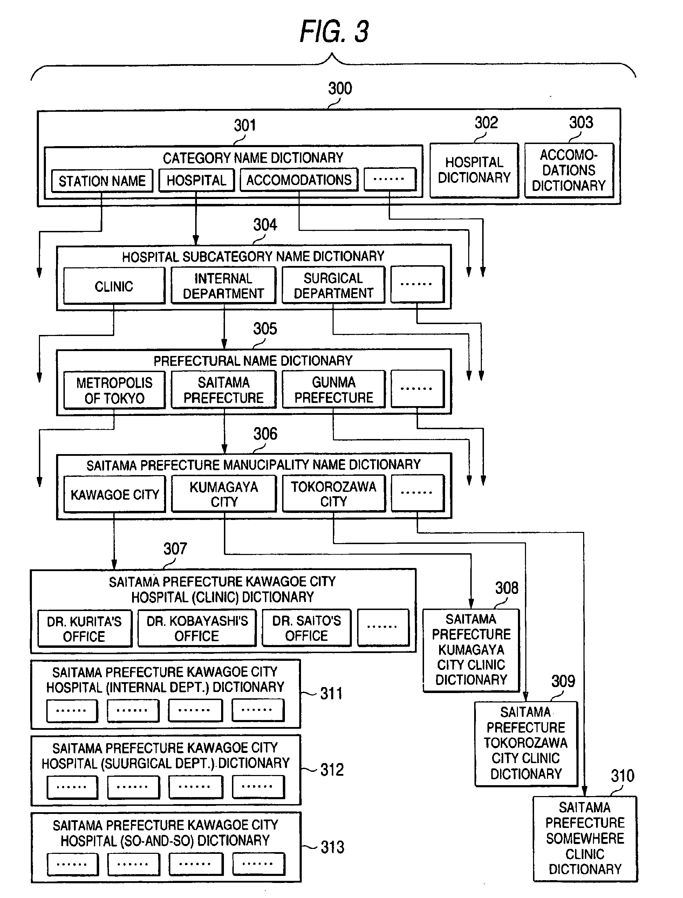

The invention is characterized in that in retrieving a speech recognition dictionary having hierarchical structure, a recognition process is also applied to one or plural institutional name dictionaries set by a user beforehand (dictionaries classified according to a narrowing-down condition and equivalent to a dictionary of hospitals and a dictionary of accommodations in the hierarchical dictionary tree shown in Fig. 3) together with a first narrowing-down condition dictionary (a category name dictionary in the hierarchical dictionary tree shown in Fig. 3) at a first hierarchy as an object of recognition.

That is, if a user sets a narrowing-down condition such as a category and an area name respectively frequently used by a user beforehand, an institutional name to be a target which is matched with the narrowing-down condition can be retrieved by one vocalization without troublesome processing that hierarchical structure is sequentially followed and a narrowing-down condition is determined. As a narrowing-down condition dictionary is also simultaneously an object of recognition, even an institutional name which is not matched with the narrowing-down condition set beforehand can be retrieved according to a conventional type procedure that hierarchical structure is sequentially followed and a narrowing-down condition is determined.

It is desirable that the number or the size of institutional name dictionaries (dictionaries classified according to a narrowing-down condition) which can be set beforehand is set by a system designer beforehand from the viewpoint of the ratio of recognition and because of the limit of usable memory capacity.

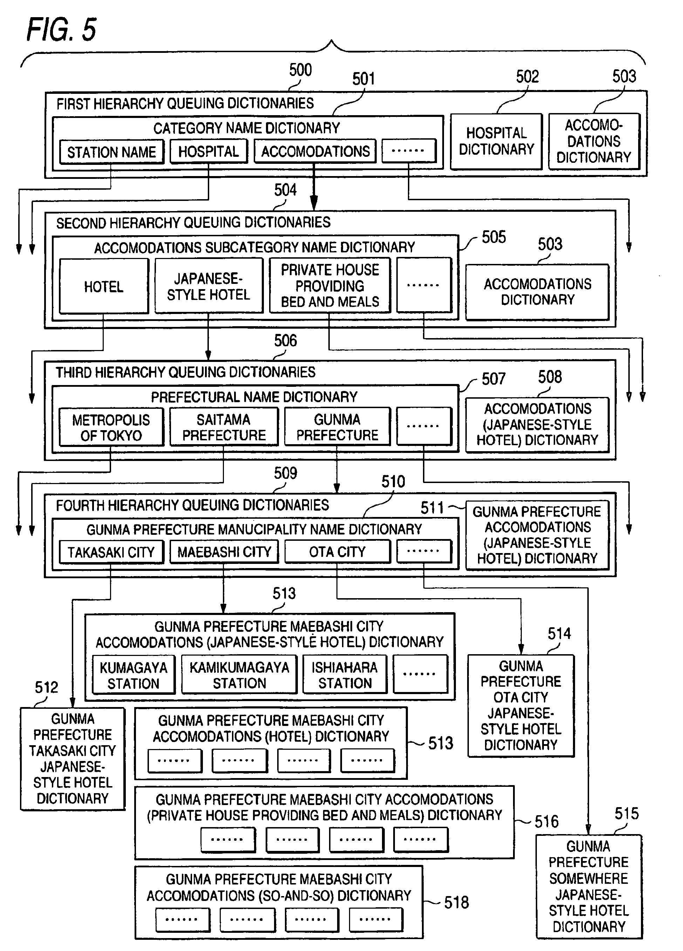

In a recognition process at a first hierarchy, even if a word in a category name dictionary is recognized, a dictionary (a dictionary of accommodations in the hierarchical dictionary tree shown in Fig. 5) matched with a narrowing-down condition and including a queuing word related to recognized voice out of queuing words stored as the queuing words in a dictionary being an object of recognition in recognition such as an institutional name dictionary (a dictionary classified according to the narrowing-down condition and equivalent to a dictionary of hospitals and a dictionary of accommodations in the hierarchical dictionary tree shown in Fig. 5) set by a user beforehand and shown in the hierarchical dictionary tree in Fig. 5 may be also an object of recognition together with the subcategory name dictionary. A recognition process at a third or the succeeding hierarchy is also similar.

Referring to the drawings, the recognition process will be described in detail below. First, according to the hierarchical dictionary tree shown in Fig. 2, communication between a system and a user is as follows.
(1) The system: "Please vocalize a command"
(2) The user: "Hospital"
(3) The system: "Next category, please"
(4) The user: "Clinic"
(5) The system: "Prefectural name, please"
(6) The user: "Saitama Prefecture"
(7) The system: "Municipality name, please"
(8) The user: "Kawagoe City"
(9) The system: "The name, please"
(10) The user: "Dr. Kurita's office"

That is, in this case, speech recognition is made with a dictionary of hospitals (clinics) in Kawagoe City of Saitama Prefecture 204 as an object of recognition for input voice, "Dr. Kurita's office".

In the meantime, communication between the system and a user in case the user sets a hospital 302 and accommodations 303 beforehand, which is the characteristic of the invention as shown in the hierarchical dictionary tree in Fig. 3 and in case the name of an institution matched with the set narrowing-down conditions is retrieved is as follows.
(1) The system: "Please vocalize a category name or an institutional name"
(2) The user: "Dr. Saito's office"

In this case, speech recognition is made with a category name dictionary 301, a dictionary of hospitals 302 and a dictionary of accommodations 303 as an object of recognition for input voice, "Dr. Saito's office". As the object (Dr. Saito's office) is included in the dictionary of hospitals 302 in this case, retrieval processing is finished by one vocalization. The dictionary of hospitals 302 is a set of dictionaries (307, 308, ---, 313) of names which belong to all subcategories of hospitals in all municipalities of all prefectures and the dictionary of accommodations 303 is also similar.

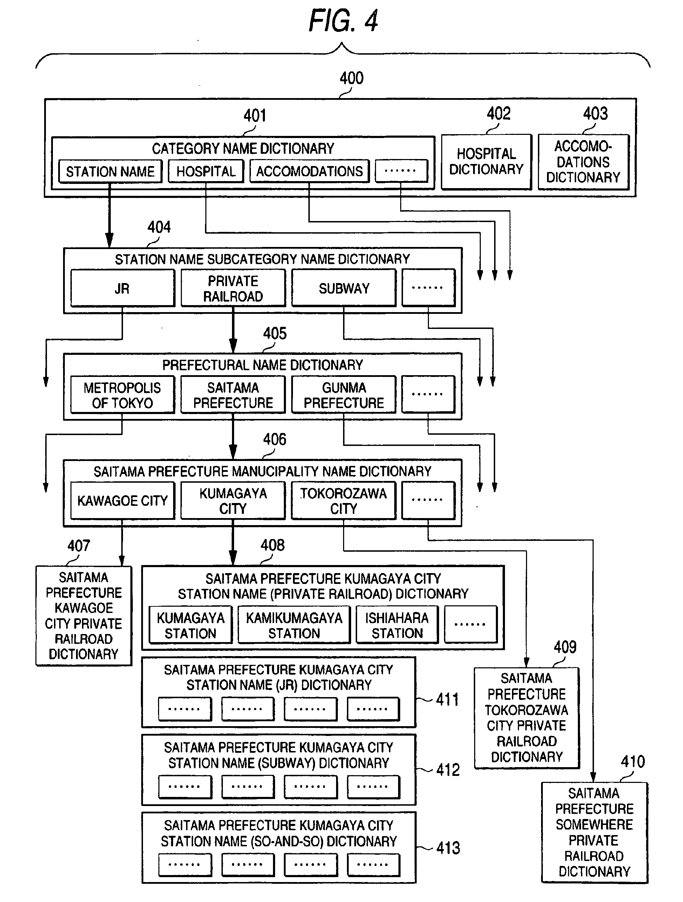

In the meantime, communication between the system and a user in case the name of an institution not matched with a set narrowing-down condition is retrieved as shown in the hierarchical dictionary tree in Fig. 4 and in case only a narrowing-down condition dictionary is an object of recognition at a second or the succeeding hierarchy is as follows.
(1) The system: "Please vocalize a category name or an institutional name"
(2) The user: "Station name"
(3) The system: "Subcategory name, please"
(4) The user: "Private railroad"
(5) The system: "Prefectural name, please"
(6) The user: "Saitama Prefecture"
(7) The system: "Municipality name, please"
(8) The user: "Kumagaya City"
(9) The system: "Station name, please"
(10) The user: "Ishiwara Station"

In this case, speech recognition is made with a dictionary of station names (of private railroads) in Kumagaya City of Saitama Prefecture 408 as an object of recognition for input voice, "Ishiwara Station". As the object (Ishiwara Station) is not included in first hierarchy queuing dictionaries 400, the user vocalizes a category name included in a category name dictionary 401 at a first hierarchy and afterward, retrieval processing is executed according to a conventional type method.

Next, a case that the name of an institution matched with a set narrowing-down condition is retrieved and institutional name dictionaries matched with a narrowing-down condition set beforehand together with the set narrowing-down condition and a narrowing-down condition determined in a process of retrieval is an object of recognition at a second or the succeeding hierarchy will be described referring to Fig. 5. In this case, communication between the system and a user is as follows.
(1) The system: "Please vocalize a category name or an institutional name"
(2) The user: "Accommodations"
(3) The system: "Subcategory name or institutional name, please"
(4) The user: "Kobayashi Hotel" In this case, speech recognition is made with a subcategory name dictionary of accommodations 505 and a dictionary of accommodations 503 as objects of recognition for input voice, "Kobayashi Hotel". As the object (Kobayashi Hotel) is included in the dictionary of accommodations 503, retrieval processing is finished at this time.

Institutional name dictionaries matched with the narrowing-down condition set beforehand together with the narrowing-down condition dictionary and the narrowing-down condition determined in the process of retrieval are objects of recognition at the second or the succeeding hierarchy. For example,
(1) The system: "Please vocalize a category name or an institutional name"
(2) The user: "Accommodations"
(3) The system: "Subcategory name or institutional name, please"
(4) The user: "Japanese-style hotel"
(5) The system: "Prefectural name or institutional name, please"
(6) The user: "Kobayashi Hotel"

Communication between the system and a user in case the name of an institution not matched with a preset narrowing-down condition is retrieved is as follows.
(1) The system: "Please vocalize a category name or an institutional name"
(2) The user: "Station name"
(3) The system: "Subcategory name, please" (*)
(4) The user: "JR"
(5) The system: "Prefectural name, please" (*)
(6) The user: "Saitama Prefecture"
(7) The system: "Municipality name, please" (*)
(8) The user: "Kumagaya City"
(9) The system: "Station name, please"
(10) The user: "Kumagaya Station"

In this case, speech recognition is made with a dictionary of station names (of JR) in Kumagaya City of Saitama Prefecture as an object of recognition for input voice, "Kumagaya Station". As no institution matched with the preset narrowing-down condition and all narrowing-down conditions determined in a process of retrieval exists, an institutional name is not included in the guidance of the system in items to which the mark * is added in the above-mentioned communication between the system and the user.

Fig. 6 is a flowchart showing a procedure for development in hierarchies in the hierarchical dictionary tree shown in Fig. 3. Referring to the hierarchical dictionary tree shown in Fig. 3 and the flowchart shown in Fig. 6, the operation of the embodiment of the invention shown in Fig. 1 will be described below.

First, a user sets a narrowing-down condition by the initial setting section 108 in a step S600. As its initial set value is stored in the initial setting storing section 106, this processing has only to be executed once at initial time and is not required to be executed every retrieval. In a step S601, it is judged whether the initiation of retrieval is triggered by a vocalization button and others or not and in case it is not triggered, control is returned to the step S601.

In the meantime, in case the initiation of retrieval is triggered, control proceeds to processing in a step S602, and the category name dictionary 301 and one or plural institutional name dictionaries stored in the initial setting storing section 106 and matched with the condition set by the user beforehand are loaded into RAM 103. In a step S603, a recognition process is executed using the dictionaries loaded into RAM 103 as objects of recognition. At this time, the user vocalizes a category name or an institutional name matched with the condition set beforehand.

In a step S604, in case the result of recognition in the step S603 is the institutional name, control is transferred to processing in a step S613, the result is displayed by the result display section 110, text-to-speech (TTS) output is made and retrieval processing is executed by the retrieving section 111. In case the result of recognition is not an institutional name in the step S604, control is transferred to processing in a step S605 and a subcategory name dictionary in the category of the result of recognition is loaded into RAM 103. In a step S606, a recognition process is executed using the dictionary corresponding to a subcategory name vocalized by the user and loaded into RAM 103 as an object of recognition.

In a step S607, a prefectural name dictionary is loaded into RAM 103 and in a step S608, a recognition process is executed using the dictionary corresponding to a prefectural name vocalized by the user and loaded into RAM 103 as an object of recognition. In a step S609, a municipality name dictionary of a prefecture as the result of recognition in the step S608 is loaded into RAM 103 and a recognition process is executed using the dictionary corresponding to a municipality name vocalized by the user in a step S610 and loaded into RAM 103 as an object of recognition.

In a step S611, institutional name dictionaries matched with conditions acquired as the result of recognition in the steps S603, S606, S608 and S610 are loaded into RAM 103 and a recognition process is executed using the dictionary corresponding to an institutional name vocalized by the user in a step S612 and loaded into RAM 103 as an object of recognition. Finally, in a step S613, the result is displayed by he result display section 110, TTS output is made and retrieval processing is executed by the retrieving section 111.

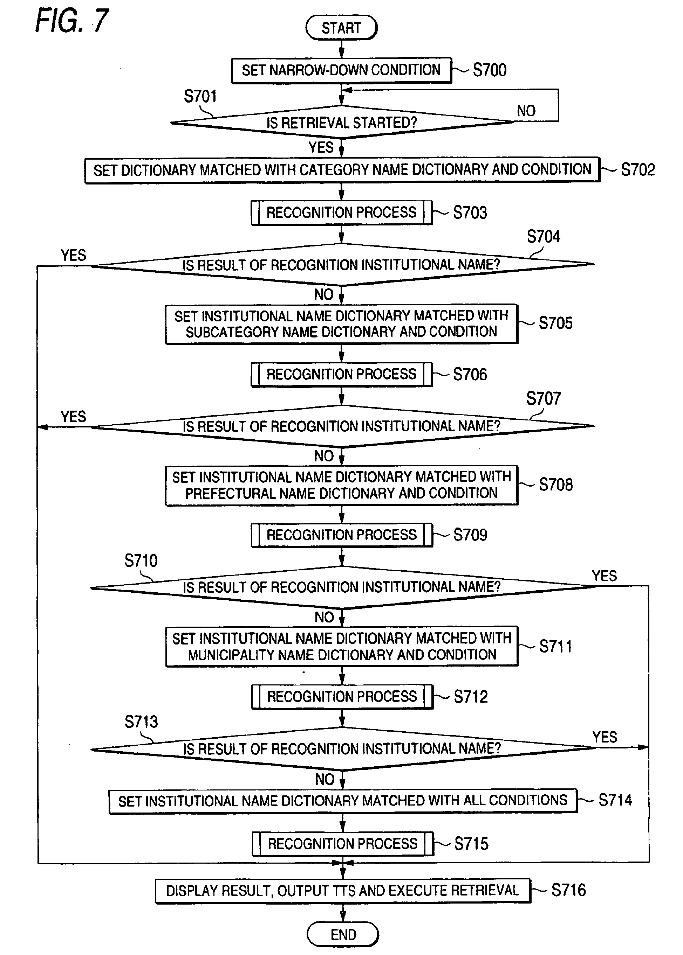

Fig. 7 is a flowchart showing a procedure for development in hierarchies in the hierarchical dictionary tree shown in Fig. 5. Referring to the hierarchical dictionary tree shown in Fig. 5 and the flowchart shown in Fig. 7, the operation of the embodiment of the invention shown in Fig. 1 will be described below.

First, a user sets a narrowing-down condition via the initial setting section 108 in a step S700. As its initial set value is stored in the initial setting storing section 106, this processing has only to be executed once at initial setting time and is not required to be executed every retrieval. In a step S701, it is judged whether the initiation of retrieval is triggered by a vocalization button and others or not and in case it is not triggered, control is returned to processing in the step S701. When the initiation of retrieval is triggered, control is transferred to processing in a step S702, and the category name dictionary and one or plural institutional name dictionaries stored in the initial setting storing section 106 and matched with the condition set by the user beforehand are loaded into RAM 103. In a step S703, a recognition process is executed using the dictionary loaded into RAM 103 as an object of recognition. At this time, the user vocalizes a category name or an institutional name matched with the condition set beforehand.

In a step S704, in case the result of recognition in the step S703 is the institutional name, control is transferred to processing in a step S716. In case the result of recognition is not the institutional name, control is transferred to processing in a step S705, the subcategory name dictionary in the category of the result of recognition and an institutional name dictionary matched with both the condition set beforehand and a condition acquired as a result of recognition in the step S703 are loaded into RAM 103 and a recognition process is executed using the dictionary corresponding to the subcategory name or the institutional name vocalized by the user in the step S706 and loaded into RAM 103 as an object of recognition.

In a step S707, in case the result of recognition in the step S706 is the institutional name, control is transferred to the processing in the step S716. In case the result of recognition is not the institutional name, control is transferred to processing in a step S708, the prefectural name dictionary and an institutional name dictionary matched with the condition set beforehand and all conditions acquired as a result of recognition in the steps S703 and S706 are loaded into RAM 103 and a recognition process is executed using the dictionary corresponding to a prefectural name or an institutional name vocalized by the user in a step S709 and loaded into RAM 103 as an object of recognition.

In a step S710, in case the result of recognition in the step S709 is the institutional name, control is transferred to the processing in the step S716. In case the result of recognition is not the institutional name, control is transferred to processing in a step S711, a municipality name dictionary of a prefecture as a result of recognition in the step S709 and an institutional name dictionary matched with the condition set beforehand and all conditions acquired as a result of recognition in the steps S703, S706 and S709 are loaded into RAM 103 and a recognition process is executed using the dictionary corresponding to a municipality name or an institutional name vocalized by the user in a step S712 and loaded into RAM 103 as an object of recognition.

In a step S713, in case the result of recognition in the step S712 is the institutional name, control is transferred to the processing in the step S716. In case the result of recognition is not the institutional name, control is transferred to processing in a step S714. An institutional name dictionary matched with all conditions acquired as a result of recognition in the steps S703, S706, S709 and S712 is loaded into RAM 103 and a recognition process is executed using the dictionary corresponding to an institutional name vocalized by the user in a step S715 and loaded into RAM 103 as an object of recognition. Finally, in the step S716, the result is displayed, TTS output is made and retrieval processing is executed.

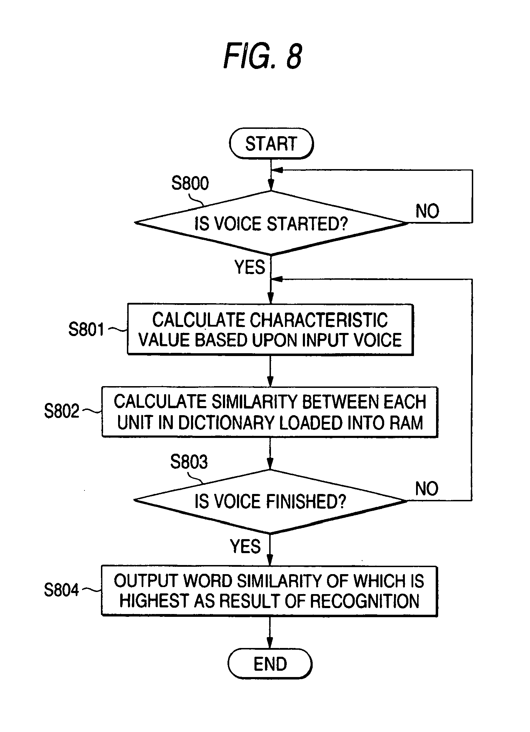

Fig. 8 is a flowchart showing the detailed procedure of a recognition process shown in Figs. 6 and 7 (in the steps S603, S606, S608, S610, S612, S703, S706, S709, S712 and S715).

Referring to the flowchart shown in Fig. 8, a recognition process executed in the above-mentioned each step will be described below. First, in a step S800, it is detected whether input from the microphone 100 includes voice or not. For a method of detection, there is a method of regarding as voice in case power exceeds a certain threshold. The detection of voice is judged as the initiation of voice, in a step S801 the characteristic value is calculated by the characteristic value calculating section 101 and in a step S802, similarity between each word included in a recognition dictionary loaded into RAM 103 and a characteristic value calculated based upon input voice is calculated. In a step S803, in case the voice is not finished, control is returned to the processing in the step S801. In case the voice is finished, a word the similarity of which is the highest is output as a result of recognition in a step S804.

Finally, for a method of the initial setting of a narrowing-down condition, two cases of a case using a remote control and a case by speech recognition will be described.

In case a remote control is used, an item of narrowing-down condition setting change is first selected on a menu screen displayed by pressing a menu button of the remote control. Hereby, a narrowing-down condition setting change screen shown in Fig. 9 is displayed. On the narrowing-down condition setting change screen, a group of institutional name dictionaries classified according to a narrowing-down condition (a prefectural name and a category name) is allocated and arranged in a matrix. In this case, a cursor is moved to a condition name for the setting to be changed by a joy stick of the remote control.

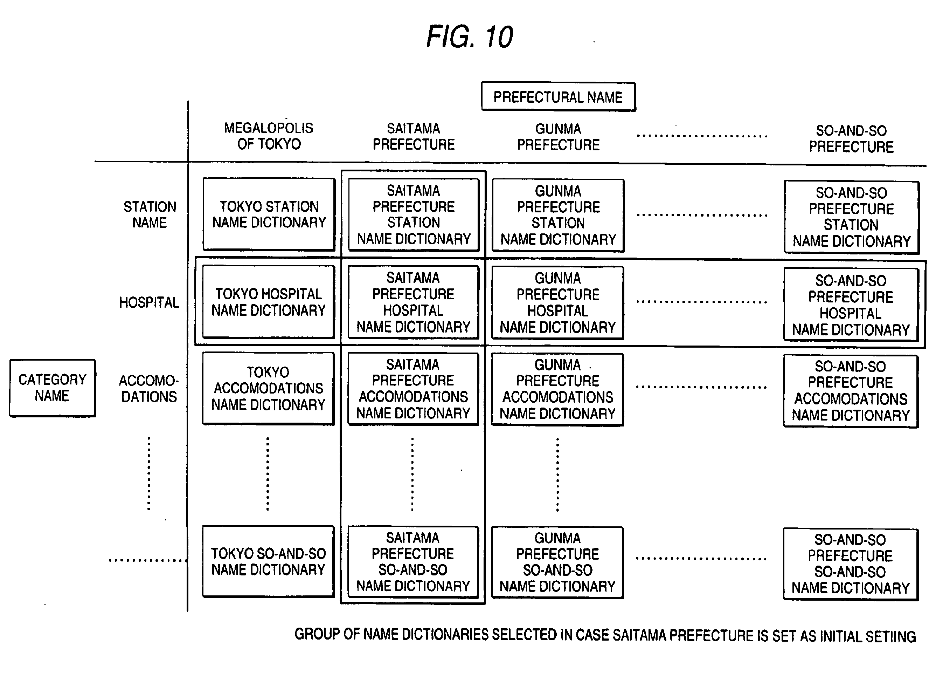

For example, a desired prefecture in a list of prefectures is selected by moving the joy stick in a transverse direction as shown in Fig. 10. In case a determination button of the remote control is pressed when Saitama Prefecture is selected for example, a condition in the position of the cursor (institutional name dictionaries in all categories existing in Saitama Prefecture) becomes a narrowing-down condition.

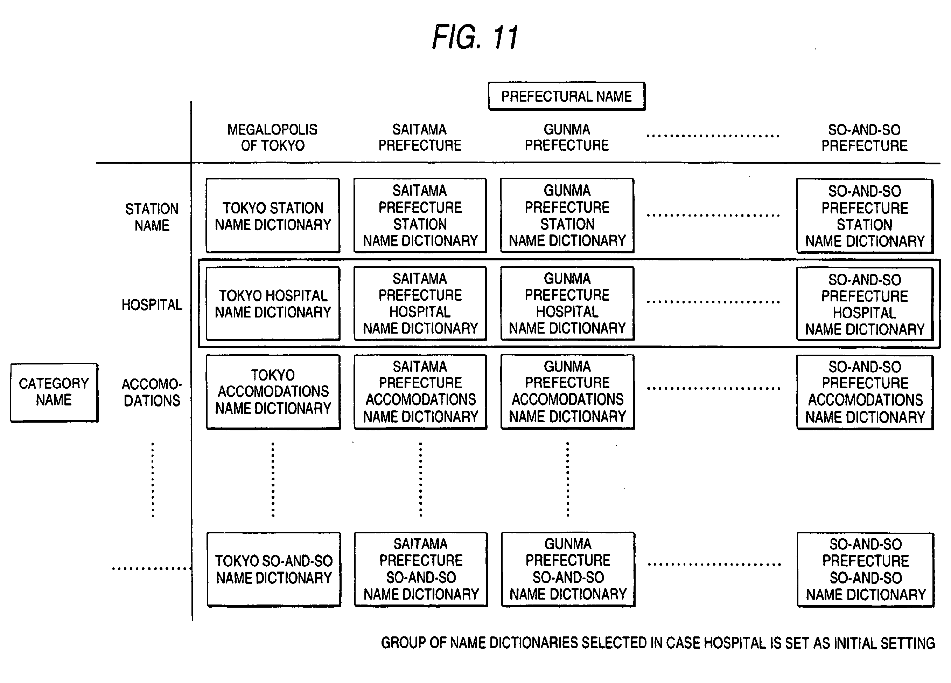

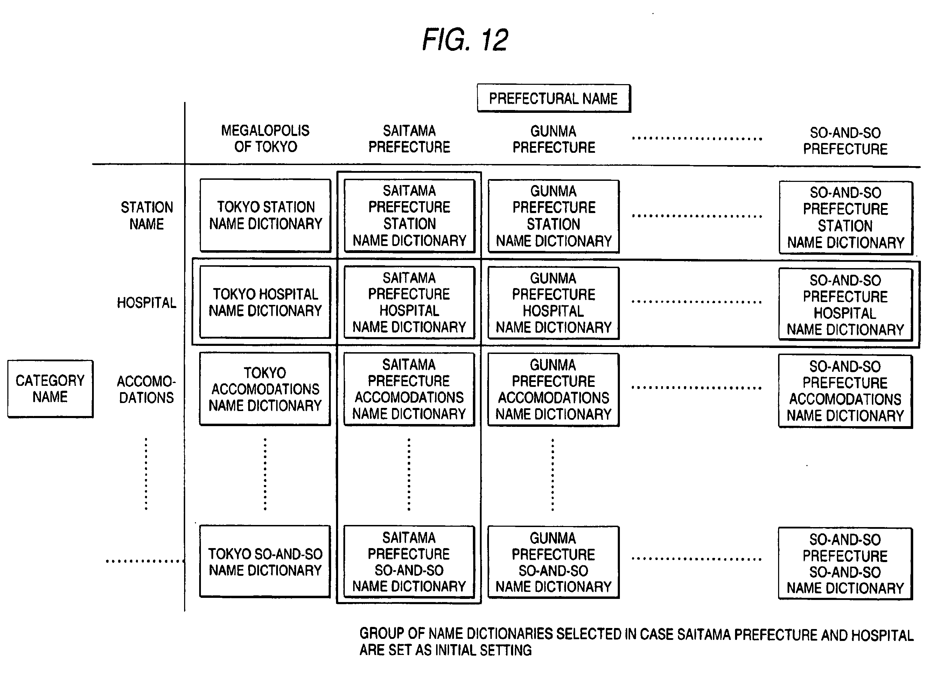

Also, a desired category in a list of category names is selected by moving the joy stick in a longitudinal direction as shown in Fig. 11. In case the determination button is pressed when hospitals are selected for example, a condition in the position of the cursor (hospital name dictionaries all over the country) becomes a narrowing-down condition. Further, when hospitals are selected as shown in Fig. 11 after Saitama Prefecture is selected on a display screen shown in Fig. 10, a hospital name dictionary of Saitama Prefecture is narrowed down as shown in Fig. 12.

In this case, the name dictionary selected in case "Saitama Prefecture" and "hospital" are set for an initial set value is shown, however, it is not essential to set both a prefectural name and a hospital name and each may be also set independently. Also, in case it is set beforehand that a condition in a position where the determination button is pressed becomes a narrowing-down condition, the setting is to be released. That is, in case the above-mentioned condition becomes a narrowing-down condition, the setting is released and in case the above-mentioned condition does not become a narrowing-down condition, the setting is changed so that the condition becomes a narrowing-down condition. Further, the case that a narrowing-down condition is selected by the joy stick is described above, however, in place of the joy stick, a touch panel may be also used.

A case that the initial setting of a narrowing-down condition is made by speech recognition will be described below. A word meaning narrowing-down condition changing processing such as the change of setting is also added to a queuing dictionary at a first hierarchy of speech recognition and in case the word is recognized, narrowing-down condition setting changing processing is started. First, in setting changing processing, a speech recognition process is executed using a dictionary having narrowing-down condition names as queuing words, in case a recognized condition is turned on, it is turned off and in case it is turned off, the setting is changed so that the condition is turned on.

Next, in the setting changing processing, a speech recognition process is executed using a dictionary having a queuing word to which turning on or turning off is added after each narrowing-down condition name, in case a recognized word includes turning on a condition name, the condition is turned on and in case the recognized word includes turning off a condition name, the condition is turned off. In the above-mentioned setting changing processing, continuous recognition using syntax that (a condition name) + (a word specifying turning on or turning off) may be also made.

As described above, according to the invention, the operability is improved and the responsibility is also enhanced respectively by executing a recognition process using a dictionary classified according to at least one narrowing-down condition set by a user beforehand in addition to a narrowing-down condition dictionary at the upmost hierarchy as objects of recognition.

As described above, the voice recognition method according to the invention is used for the voice recognition unit having plural speech recognition dictionaries having hierarchical structure, the improvement of the operability and the enhancement of the responsibility are made by executing a recognition process using a dictionary classified according to at least one narrowing-down condition set by a user beforehand together with the narrowing-down condition dictionary at the upmost hierarchy as objects of recognition and the name of a target institution matched with the following narrowing-down condition can be retrieved by one vocalization by setting a narrowing-down condition frequently used by a user such as a category and an area name beforehand without troublesome processing that hierarchical structure is sequentially followed and a narrowing-down condition is determined.

Also, according to the invention, in case an institutional name unmatched with a narrowing-down condition set beforehand is retrieved, the conventional type procedure that a narrowing-down condition is sequentially determined can be taken. Further, in case an institutional name matched with a narrowing-down condition set beforehand is retrieved, processing for recognizing the institutional name can be also executed using one dictionary set finally matched with the narrowing-down condition after a narrowing-down condition is sequentially determined according to the conventional procedure.

## Claims

1. A voice recognition apparatus, comprising:
a plurality of hierarchically stored speech recognition dictionaries;
extracting means for extracting the contents of specific dictionaries as a list of queuing words;
storage means for temporarily storing the extracted list of queuing words;
recognition means for recognizing an input voice command by comparing the input voice command and the list of queuing words stored in the storage means; and the voice recognition apparatus **characterized by** further comprising:
setting means for permitting a user to preset a narrowing-down condition based on information related to a non-hierarchical attribute, and wherein
the extracting means is arranged to extract, from the plurality of hierarchically stored speech recognition dictionaries, a dictionary at a specific level of the hierarchy and a dictionary prepared by reference to the narrowing-down condition preset by the user as the list of queuing words and arranged to store them in the storage means when a recognition process starts.

2. A voice recognition apparatus according to claim 1, wherein the specific level of the hierarchy is the highest level of the hierarchy.

3. A voice recognition apparatus according to claim 1, wherein the specific level of the hierarchy is a level which is lower than the highest level of the hierarchy.

4. A voice recognition apparatus according to either of claims 2 or 3, wherein the extracting means, in response to the recognition by the recognition means of further voice commands, extracts as the list of queuing words:
lower level dictionaries being associated with selected queuing words, each one of which is located at a hierarchical level which is iteratively lower with each recognition process.

5. A voice recognition apparatus according to either of claims 2 or 3, wherein said speech recognition dictionaries comprise:
a classification dictionary for storing the classification names of institutions; and
an institution dictionary for storing the names of institutions which belong to a type of institution.

6. A voice recognition apparatus according to either of claims 2 or 3, wherein said speech recognition dictionaries comprise:
an area dictionary for storing area names; and
an institution dictionary for storing the names of institutions existing in an area.

7. A voice recognition apparatus according to any of claims 5 or 6, wherein, when a user selects a desired dictionary, the contents of that dictionary are stored in the storage means.

8. A voice recognition method for a voice recognition unit having a plurality of speech recognition dictionaries which are hierarchically stored, said method comprising the steps of:
preparing from said plurality of speech recognition dictionaries, both a dictionary at a specific level of the hierarchy and a dictionary associated with a narrowing-down condition based on information related to a non-hierarchical attribute preset by a user and
recognizing an input voice command by using both said dictionary at a specific level of the hierarchy and said dictionary prepared with reference to the narrowing-down condition preset by the user.

9. A method according to claim 8, wherein the specific level is the highest level in the hierarchy.

10. A method according to claim 8, wherein the specific level is a level which is lower than the highest level in the hierarchy.

11. A voice recognition method according to either of claims 9 or 10, wherein the dictionaries classified according to at least one narrowing-down condition set by a user beforehand are dictionaries the frequency of use of which is high.

## Patentansprüche

1. Spracherkennungsvorrichtung, die umfasst:
eine Vielzahl von hierarchisch gespeicherten Spracherkennungswörterbüchern,
eine Extrahiereinrichtung zum Extrahieren des Inhalts von bestimmten Wörterbüchern als eine Liste von in Warteschlange angeordneten Wörtern,
eine Speichereinrichtung zum vorübergehenden Speichern der extrahierten Liste von in Warteschlange angeordneten Wörtern,
eine Erkennungseinrichtung zum Erkennen eines eingegebenen Sprachbefehls durch Vergleichen des eingegebenen Sprachbefehls und der Liste von in Warteschlange angeordneten Wörtern, die in der Speichereinrichtung gespeichert ist, wobei die Spracherkennungsvorrichtung **dadurch gekennzeichnet ist, dass** sie des Weiteren umfasst:
eine Einstelleinrichtung, um einem Benutzer zu ermöglichen, eine eingrenzende Bedingung auf Basis von Informationen, die sich auf ein nichthierarchisches Attribut beziehen, voreinzustellen, wobei
die Extrahiereinrichtung eingerichtet ist, um aus der Vielzahl von hierarchisch gespeicherten Spracherkennungswörterbüchern ein Wörterbuch auf einer bestimmten Ebene der Hierarchie und ein Wörterbuch, das durch Bezugnahme auf die eingrenzende Bedingung, die durch den Benutzer als die Liste von in Warteschlange angeordneten Wörtern voreingestellt wurde, erstellt wurde, zu extrahieren, und eingerichtet ist, um sie in der Speichereinrichtung zu speichern, wenn eine Erkennungsprozess beginnt.

2. Spracherkennungsvorrichtung nach Anspruch 1, wobei die bestimmte Ebene der Hierarchie die höchste Ebene der Hierarchie ist.

3. Spracherkennungsvorrichtung nach Anspruch 1, wobei die bestimmte Ebene der Hierarchie eine Ebene ist, die niedriger ist als die höchste Ebene der Hierarchie.

4. Spracherkennungsvorrichtung nach Anspruch 2 oder 3, wobei die Extrahiereinrichtung in Reaktion auf die Erkennung von weiteren Sprachbefehlen durch die Erkennungseinrichtung als die Liste von in Warteschlange angeordneten Wörtern extrahiert:
Wörterbücher niedriger Ebene, die mit ausgewählten in Warteschlange angeordneten Wörtern verbunden sind, von denen jedes auf einer hierarchischen Ebene angeordnet ist, die mit jedem Erkennungsprozess iterativ niedriger ist.

5. Spracherkennungsvorrichtung nach Anspruch 2 oder 3, wobei die Spracherkennungswörterbücher umfassen:
ein Klassifizierungswörterbuch zum Speichern von Klassifizierungsnamen von Institutionen und
ein Institutionswörterbuch zum Speichern von Namen von Institutionen, die zu einem Institutionstyp gehören.

6. Spracherkennungsvorrichtung nach Anspruch 2 oder 3, wobei die Spracherkennungswörterbücher umfassen:
ein Gebietswörterbuch zum Speichern von Gebietsnamen und
ein Institutionswörterbuch zum Speichern der Namen von Institutionen, die in einem Gebiet vorhanden sind.

7. Spracherkennungsvorrichtung nach einem der Ansprüche 5 oder 6, wobei, wenn ein Benutzer ein erwünschtes Wörterbuch auswählt, die Inhalte dieses Wörterbuches in der Speichereinrichtung gespeichert werden.

8. Spracherkennungsverfahren für eine Spracherkennungseinheit mit einer Vielzahl von Spracherkennungswörterbüchern, die hierarchisch gespeichert sind, das Verfahren umfasst die folgenden Schritte:
Erstellen aus der Vielzahl von Spracherkennungswörterbüchern sowohl eines Wörterbuches auf einer bestimmten Ebene der Hierarchie als auch eines Wörterbuches, das mit einer eingrenzenden Bedingung verbunden ist, die auf Basis von Informationen, die sich auf ein nichthierarchisches Attribut beziehen, durch den Benutzer voreingestellt wird, und
Erkennen eines eingegebenen Sprachbefehls durch Verwenden sowohl des Wörterbuches auf einer bestimmten Ebene der Hierarchie als auch des Wörterbuches, das unter Bezugnahme auf die durch den Benutzer voreingestellte eingrenzende Bedingung erstellt wurde.

9. Verfahren nach Anspruch 8, wobei die bestimmte Ebene die höchste Ebene in der Hierarchie ist.

10. Verfahren nach Anspruch 8, wobei die bestimmte Ebene der Hierarchie eine Ebene ist, die niedriger ist als die höchste Ebene in der Hierarchie.

11. Spracherkennungsverfahren nach Anspruch 9 oder 10, wobei die Wörterbücher, die entsprechenden wenigstens einer eingrenzenden Bedingung klassifiziert sind, die durch einen Benutzer im Voraus eingestellt wird, Wörterbücher sind, deren Nutzungshäufigkeit hoch ist.

## Revendications

1. Dispositif de reconnaissance vocale, comprenant :
une pluralité de dictionnaires de reconnaissance de la parole mémorisés hiérarchiquement ;
un moyen d'extraction destiné à extraire le contenu de dictionnaires spécifiques sous forme d'une liste de mots en attente ;
un moyen de mémorisation destiné à mémoriser temporairement la liste extraite de mots en attente ;
un moyen de reconnaissance destiné à reconnaître une instruction vocale d'entrée par comparaison de l'instruction vocale d'entrée et de la liste de mots en attente mémorisée dans le moyen de mémorisation ; et le dispositif de reconnaissance vocale étant **caractérisé en ce qu'**il comprend en outre :
un moyen de paramétrage destiné à permettre à un utilisateur de paramétrer préalablement une condition de rétrécissement basée sur de l'information liée à un attribut non hiérarchique ; et dans lequel :
le moyen d'extraction est agencé pour extraire, en tant que liste de mots en attente, de la pluralité de dictionnaires de reconnaissance de la parole mémorisés hiérarchiquement, un dictionnaire à un niveau spécifique de la hiérarchie et un dictionnaire préparé par référence à la condition de rétrécissement paramétrée préalablement par l'utilisateur et est agencé pour les mémoriser dans le moyen de mémorisation lorsque démarre à un traitement de reconnaissance.

2. Dispositif de reconnaissance vocale selon la revendication 1, dans lequel le niveau spécifique de la hiérarchie est le niveau le plus haut de la hiérarchie.

3. Dispositif de reconnaissance vocale selon la revendication 1, dans lequel le niveau spécifique de la hiérarchie est un niveau qui est plus bas que le niveau le plus haut de la hiérarchie.

4. Dispositif de reconnaissance vocale selon l'une ou l'autre des revendications 2 ou 3, dans lequel le moyen d'extraction, en réponse à la reconnaissance par le moyen de reconnaissance d'instructions vocales supplémentaires, extrait comme liste de mots en attente :
les dictionnaires de niveau plus bas qui sont associés aux mots en attente choisis, dont chacun est situé à un niveau hiérarchique qui est plus bas de façon itérative avec chaque traitement de reconnaissance.

5. Dispositif de reconnaissance vocale selon l'une ou l'autre des revendications 2 ou 3, dans lequel lesdits dictionnaires de reconnaissance de la parole comprennent :
un dictionnaire de classifications destiné à mémoriser les noms de classifications d'institutions ; et
un dictionnaire d'institutions destiné à mémoriser les noms d'institutions qui appartiennent à un type d'institution.

6. Dispositif de reconnaissance vocale selon l'une ou l'autre des revendications 2 ou 3, dans lequel lesdits dictionnaires de reconnaissance de la parole comprennent :
un dictionnaire de zones destiné à mémoriser des noms de zone ; et
un dictionnaire d'institutions destiné à mémoriser les noms d'institutions existant dans une zone.

7. Dispositif de reconnaissance vocale selon l'une quelconque des revendications 5 ou 6, dans lequel, lorsqu'un utilisateur choisit un dictionnaire voulu, le contenu de ce dictionnaire est mémorisé dans le moyen de mémorisation.

8. Procédé de reconnaissance vocale pour une unité de reconnaissance vocale comportant une pluralité de dictionnaires de reconnaissance de la parole qui sont mémorisés hiérarchiquement, ledit procédé comprenant les étapes :
de préparation à partir de ladite pluralité de dictionnaires de reconnaissance de la parole, à la fois d'un dictionnaire à un niveau spécifique de la hiérarchie et d'un dictionnaire associé à une condition de rétrécissement, basée sur de l'information liée à un attribut non hiérarchique, paramétrée préalablement par un utilisateur ; et
de reconnaissance d'une instruction vocale d'entrée en utilisant ledit dictionnaire à un niveau spécifique de la hiérarchie et ledit dictionnaire préparé en se référant à la condition de rétrécissement paramétrée préalablement par l'utilisateur.

9. Procédé selon la revendication 8, dans lequel le niveau spécifique de la hiérarchie est le niveau le plus haut de la hiérarchie.

10. Procédé selon la revendication 8, dans lequel, le niveau spécifique de la hiérarchie est un niveau qui est plus bas que le niveau le plus haut de la hiérarchie.

11. Procédé de reconnaissance vocale selon l'une ou l'autre des revendications 9 ou 10, dans lequel les dictionnaires classés selon au moins une condition de rétrécissement fixée au préalable par un utilisateur sont des dictionnaires dont la fréquence d'utilisation est élevée.
